(19) **Europäisches Patentamt / European Patent Office / Office européen des brevets**

(11) **EP 2 476 244 B1**

(12) # FASCICULE DE BREVET EUROPEEN

(45) Date de publication et mention
de la délivrance du brevet:
**01.07.2015 Bulletin 2015/27**

(21) Numéro de dépôt: **10750139.7**

(22) Date de dépôt: **10.09.2010**

(51) Int Cl.:
*H04N 1/00* <sup>(2006.01)</sup>　　　*G06K 9/00* <sup>(2006.01)</sup>
*G06K 9/38* <sup>(2006.01)</sup>

(86) Numéro de dépôt international:
**PCT/EP2010/063283**

(87) Numéro de publication internationale:
**WO 2011/029894 (17.03.2011 Gazette 2011/11)**

(54) **PROCÉDÉ DE DÉTECTION DE PAGES BLANCHES ET MACHINE MULTIFONCTION CORRESPONDANTE**

VERFAHREN FÜR DEN NACHWEIS VON LEEREN SEITEN UND ZUGEHÖRIGE MULTIFUNKTIONSMASCHINE

METHOD FOR DETECTING BLANK PAGES, AND CORRESPONDING MULTIFUNCTIONAL MACHINE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **10.09.2009 FR 0956217**

(43) Date de publication de la demande:
**18.07.2012 Bulletin 2012/29**

(73) Titulaire: **SAGEMCOM DOCUMENTS SAS 92500 Rueil Malmaison (FR)**

(72) Inventeurs:
• **LABOIS, Olivier**
  **92500 Rueil Malmaison (FR)**
• **SABATIER, Pierre**
  **92500 Rueil Malmaison (FR)**
• **BERGER, Jérôme**
  **92500 Rueil Malmaison (FR)**

(74) Mandataire: **Regimbeau 20, rue de Chazelles 75847 Paris Cedex 17 (FR)**

(56) Documents cités:
**WO-A1-2006/104627　　JP-A- 2002 044 367**

EP 2 476 244 B1

Printed by Jouve, 75001 PARIS (FR)

**Description**

DOMAINE TECHNIQUE GENERAL

La présente invention concerne un procédé de détection de pages blanches de feuilles d'un document scanné sur une machine multifonction comportant un scanner.
L'invention concerne également une machine multifonction, la machine comportant un scanner de mise en oeuvre d'un procédé selon l'invention.

ETAT DE L'ART

Lors d'un scan d'un document, comportant une pluralité de feuilles, sur une machine multifonction comportant un scanner, classiquement un scanner double face, on cherche à détecter les pages blanches pour éviter de les garder en mémoire et de les traiter.
A l'heure actuelle la plupart des solutions proposées sont établies à partir d'une technique simple basée sur une comparaison du niveau total de blancheur de chaque page par rapport à un seuil.
Une telle solution est par exemple connue de WO2006/104627.
La solution selon WO2006/104627 permet également de repérer les informations présentes de l'autre côté d'une page et vues par transparence lors du scan.
Cette solution présente cependant l'inconvénient de requérir un recadrage préalable et complexe entre le recto et le verso de la feuille scannée, car en raison de la mécanique du scanner, les pages recto et verso scannées comportent un décalage entre elles.
On connaît également de JP 2002 044367 un procédé de détection de pages blanches de feuilles d'un document à scanner sur une machine multifonction.
JP 2002 044367 divulgue un procédé dans lequel le scanner compare des niveaux d'intensité de gris et décide que la feuille comporte une feuille blanche lorsque les deux pages sont très différentes en intensité, ou que la feuille comporte deux pages non blanches lorsque les deux pages sont similaires, c'est-à-dire lorsqu'une donnée caractéristique de la similarité (ici le niveau d'intensité des gris) des deux pages est supérieure à un critère de similarité.
Il n'est donc pas possible de détecter selon JP 2002 044367 une page blanche sur une feuille comportant deux pages similaires, et il n'est donc pas possible de détecter des informations présentes de l'autre côté d'une page vues par transparence.

PRESENTATION DE L'INVENTION

L'invention propose de pallier ces inconvénients.
A cet effet, on propose selon l'invention un procédé selon la revendication 1.
L'invention est avantageusement complétée par les caractéristiques des revendications 2 à 9, prises seules ou en une quelconque de leur combinaison techniquement possible.
L'invention concerne également une machine multifonction comportant un scanner de mise en oeuvre d'un procédé selon l'invention.
L'invention présente de nombreux avantages.
Elle permet tout d'abord une détection efficace des pages blanches d'un document, sans nécessiter un recadrage entre le recto et le verso des feuilles scannées. Cela est permis par le fait que la solution selon l'invention est résistante aux décalages entre le recto et le verso des feuilles.
Elle permet de détecter automatiquement si les informations apparemment portées par une page scannée correspondent ou non à de réelles informations.
Des exemples d'informations non réelles sont :

- une encre déposée sur une face (par exemple un tampon mouillé sur le recto) et qui apparaît sur l'autre face (le verso) par porosité du matériau de la feuille ou qui est vue par transparence par le scanner,
- la couleur monochrome foncée d'une feuille, ou
- la froissure de la feuille qui est détectée par le scanner car elle forme une ombre sur la feuille lors du scan.

En revanche, l'invention permet notamment de classer comme page porteuse d'information une page sur laquelle il n'y a que des écritures manuscrites même très peu contrastées par rapport au fond.
L'invention permet d'être mise en oeuvre sur une machine multifonction ayant des ressources limitées de mémoire et de calcul, sans intervention de l'utilisateur, de manière automatisée.
L'invention permet ainsi une détection des informations très robuste et rapide, car elle est tournée majoritairement sur la détection des pages comportant des informations réelles. Cela est dû notamment au fait que les pages détectées comme blanches ne sont pas transférées vers la mémoire pour sauvegarde et traitement. Ainsi, pour optimiser la vitesse de décision, plusieurs étapes de détection ont été mises en place. Elles sont franchies uniquement dans les cas les plus difficiles, les cas les plus faciles étant détectés lors des premières étapes de détection.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 est un schéma bloc simplifié des principales étapes d'un procédé selon l'invention ;
- la figure 2 est une représentation très simplifiée d'une machine multifonction selon l'invention ;
- les figures 3 et 4 illustrent la construction des cartes de dissimilarités locales CDL à partir d'un recto et d'un verso d'une feuille ;
- les figures 5 montrent des exemples d'histogrammes reprenant le nombre de pixels de cartes de dissimilarités locales CDL ayant une même valeur ; et
- la figure 6 représente schématiquement un exemple de calcul de la distance $d(x,R)$.

Sur l'ensemble des figures, les éléments similaires portent des références numériques identiques.

DESCRIPTION DETAILLEE

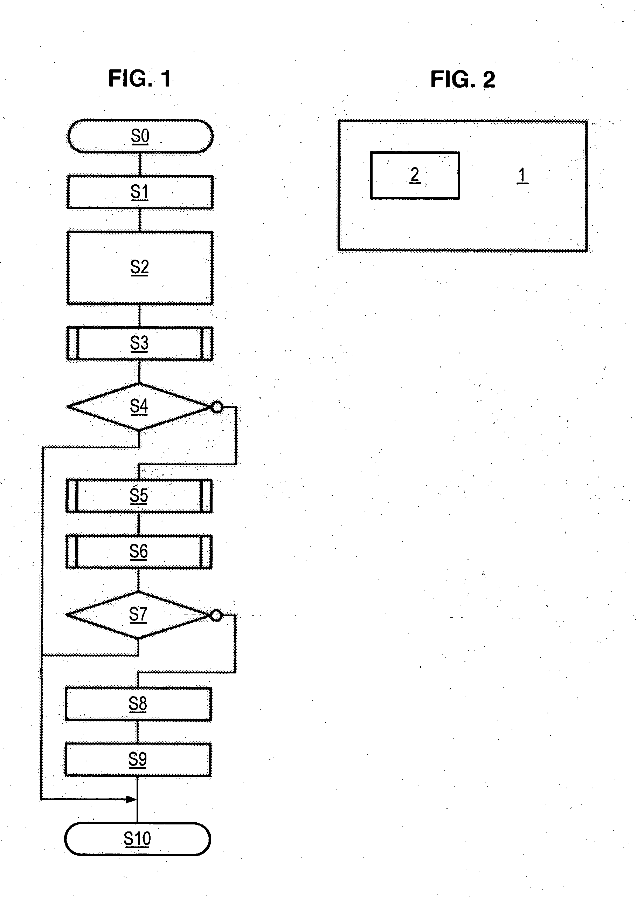

En référence aux figures 1 et 2, on a représenté les principales étapes d'un procédé selon l'invention, mis en oeuvre sur une machine multifonction 1 comportant un scanner 2.

La machine 1 multifonction peut comporter des fonctions de télécopie, de photocopie, de serveur réseau, d'impression, de téléphonie, et/ou toute autre fonction de bureautique par exemple.

Le scanner 2 comporte classiquement tous les moyens de traitement et de mémoire pour le scan de feuilles d'un document à scanner sur la machine 1. Le scanner 2 permet avantageusement le scan double face de chaque feuille du document à scanner.

Comme on peut le distinguer sur la figure 1, un procédé possible de détection de pages blanches des feuilles du document scanné sur la machine 1 multifonction comportant le scanner 2, comporte les principales étapes selon lesquelles le scanner 2 :

- scanne, lors d'une étape S0, deux pages d'au moins une feuille du document à scanner ;
- effectue une détection simple de page blanche, lors d'une étape référencée par S6 sur la figure 1, sur chaque feuille scannée ;
- sélectionne, lors d'une étape S7, chaque feuille ne comportant pas au moins une page détectée comme blanche lors de la détection précitée ;
- compare, lors d'une étape S9, les deux pages de ladite feuille sélectionnée, et
- classe, lors de l'étape S9, une page comme blanche lorsqu'elle est similaire à l'autre page de ladite feuille.

Comme on le verra plus en détail dans la suite de la présente description, le scanner 2 considère qu'une page est « similaire » à une autre page, lorsqu'une donnée caractéristique de la similarité des deux pages est supérieure à un critère de similarité.

Plus précisément, l'étape S0 permet classiquement au scanner 2 de scanner deux pages d'une feuille du document à scanner.

Lors d'une étape S1, le scanner 2 analyse les pages scannées et effectue classiquement leur transcription en un tableau représentant une valeur de chaque pixel de chaque page. Les pages sont ainsi transformées en un ensemble de pixels appartenant à $\mathfrak{R}^{\acute{e}}$, l'espace des nombres réels.

Lors d'une étape S2, le scanner 2 effectue une étape de suppression des bords et/ou de réajustement de la taille et/ou de transposition en niveau de gris des pages scannées.

On donne ici un exemple de technique de suppression des bords.

Dans un scanner double face, les pages scannées comportent classiquement un bord plus ou moins large. C'est pour cette raison qu'il est avantageux de supprimer les bords des pages pour ne pas gêner l'interprétation postérieure des pages. La technique employée est volontairement très simple et consiste à supprimer par exemple 5% de la page sur les bords. D'autres valeurs que 5%, ou d'autres techniques plus complexes de suppression peuvent bien entendu être prévues.

On donne ici un exemple de technique de réajustement de la taille des pages scannées.

Par souci d'augmentation de la vitesse de mise en oeuvre du procédé par le scanner 2, la taille de chaque page scannée est réduite. Il est ainsi possible de réduire la résolution de la page en ne conservant qu'un pixel sur deux, pour chaque passage de réduction. Cela permet d'avoir une grande rapidité de mise en oeuvre.

La réduction s'effectue jusqu'à ce que la superficie des pages soit inférieure à 150 000 pixels. Une telle taille permet en effet d'avoir une bonne vitesse de mise en oeuvre des étapes postérieures, et une bonne performance sur la détection des pages blanches. D'autres techniques sont également possibles, par exemple en prenant pour chaque pixel la moyenne des pixels environnants.

On donne ici un exemple de technique de transposition en niveau de gris des pages scannées.

On comprend qu'une détection de page blanche ne nécessite pas de prendre en compte la couleur. Il est donc avantageux d'attribuer une valeur de niveau de gris pour les pixels des pages scannées. Cela permet de simplifier la suite des traitements.

Afin d'optimiser la complexité et le besoin mémoire du scanner pour la mise en oeuvre du procédé, les étapes de suppression des bords et/ou de réajustement de la taille et/ou de transposition en niveau de gris sur les pages scannées peuvent être effectuées simultanément. Pour cela, on peut par exemple extraire un à un les pixels voulus, les transformer en niveaux de gris, puis les enregistrer un à un dans la page scannée à traiter.

Lors d'une étape S3, le scanner 2 effectue une première détection simple de page blanche ou de page porteuse d'information sur chaque feuille scannée, en niveau de gris. Une détection simple est une technique basée sur une comparaison par rapport à au moins un seuil.

Ainsi, l'information contenue dans chacune des pages est inspectée et une décision est prise sur son état.

Soit la page est incontestablement blanche (c'est-à-dire qu'elle n'est pas porteuse d'information) ou non-blanche (c'est-à-dire qu'elle est porteuse d'information), soit le scanner ne peut pas prendre une décision (c'est le cas notamment pour des pages contenant peu d'écritures, ou ayant reçu les informations de l'autre page par transparence, ou dont les écritures sont peu contrastées par rapport au fond).

Le but de la première détection simple lors de l'étape S3 est de déterminer si oui ou non il y a sur la feuille des informations écrites en impression ou manuellement, quelle que soit la couleur de la feuille et des informations.

On donne ici un exemple de technique pour la première détection selon S3.

Il est par exemple possible de mesurer tout d'abord la variance des pixels sur l'ensemble des pages converties en niveaux de gris, puis de comparer les mesures effectuées à deux seuils : un seuil t1 pour la détection de pages blanches et un seuil t2 pour la détection de pages porteuses d'information. Les deux seuils t1 et t2 peuvent par exemple être déterminés de manière empirique. Le seuil haut t2 peut par exemple être déterminé à la valeur 125. Cette valeur correspond en effet à la plus petite valeur de variance provenant des pages porteuses d'information sur une grande partie de la feuille. Le seuil bas t1 peut être déterminé à la valeur 2, ce qui correspond à des pages presque parfaitement blanches : les pages ayant très peu d'écritures et un faible contraste avec le fond, ont une variance très faible. Le seuil t1 n'est utile que rarement. Les pages dont la variance est supérieure à 125 sont classées comme porteuses d'information, et les pages dont la variance est inférieure à 2 sont classées comme blanches.

On détermine lors d'une étape S4 s'il est possible d'effectuer une détection sur chaque page de la feuille (en d'autres termes, si la feuille comporte deux pages blanches, deux pages porteuses d'information ou une page porteuse d'information et une page blanche). Si c'est le cas, alors le scanner passe à une étape S10, qui est une étape de classement des pages : les pages porteuses d'information sont enregistrées et traitées et les pages blanches ne sont ni traitées ni enregistrées.

En revanche, si chaque page n'a pas été détectée comme blanche ou porteuse d'information lors de la première détection de l'étape S3, le scanner passe à une étape S5.

Lors de l'étape S5, postérieure à l'étape S4, le scanner 2 effectue une binarisation des pages de chaque feuille sélectionnée lors de l'étape S4 (c'est-à-dire une binarisation des pixels des pages de chaque feuille), la binarisation consistant ainsi à donner

une valeur active à chaque pixel dont le niveau de gris est supérieur à un seuil $\tau$, et

une valeur inactive à un pixel dont le niveau de gris est inférieur au seuil T.

Comme on l'explique par la suite, $\tau$ est défini dynamiquement en fonction du voisinage du pixel.

Dans le procédé, on choisit classiquement qu'un bit ayant une valeur active représente un pixel porteur d'information et un bit ayant une valeur inactive représente un pixel de fond (« blanc »).

On donne ici un exemple d'une technique possible de binarisation.

La binarisation de l'étape S5 consiste à obtenir une image binaire (constituée de 0 (valeur inactive) et préférentiellement de 1 (valeur active) ou parfois de 0 (valeur inactive) et 255 (valeur active) selon les cas) à partir d'une page en niveaux de gris issue de l'étape S4. La binarisation permet de répertorier l'ensemble des informations présentes sur la feuille, en ayant d'un côté les informations et de l'autre le fond. La binarisation permet aussi d'augmenter la rapidité de mise en oeuvre des étapes postérieures du procédé et de réduire considérablement les besoins en mémoire du scanner. En effet, la page, une fois binarisée, n'a besoin que d'un bit par pixel.

Une technique avantageuse de binarisation peut être une adaptation de celle proposée par Sauvola dans son article intitulé «Adaptative document image binarisation » publié en 1998. Cette technique repose sur une sélection de seuil τ de manière adaptative par la formule:

$$\tau(x,y) = \mu(x,y) \cdot \left[ 1 + k \cdot \left( \frac{\sigma(x,y)}{R} - 1 \right) \right]$$

où μ est la moyenne locale estimée dans un voisinage local au pixel de coordonnées (x,y), voisinage de taille nxn (dans notre exemple n=3) ;
σ est l'écart-type local estimé dans un voisinage local au pixel de coordonnées (x,y), dé taille nxn ;
k est le poids servant à préciser quelle proportion des contours d'une image est intégrée dans l'image (la valeur classique pour le poids k est de 0,5) ;
R désigne la gamme dynamique de l'écart-type σ (R=128 pour des pages codées sur 256 niveaux de gris).

Avantageusement, on augmente la sensibilité de la détection en modifiant la valeur du poids k. La valeur k = 0,1 est préférentielle, car pour une valeur inférieure de k, les contours des nuances du fond sont détectés comme des écritures : le scanner est alors trop sensible. Pour les valeurs supérieures, le scanner peut ne pas être assez sensible.

Lors d'une étape S6, le scanner 2 effectue une deuxième détection simple de page blanche ou de page porteuse d'information sur chaque page binarisée.

On donne ici un exemple de technique de détection selon l'étape S6.

Le scanner 2 compare la quantité d'informations sur chaque page binarisée par rapport à un seuil s.

Le seuil s est déterminé de manière empirique et correspond à la quantité d'informations provenant par exemple d'une ligne de pixels d'une longueur égale à la moitié de la largeur de la feuille à scanner.

Il a été constaté que le seuil s ainsi déterminé est en-dessous de l'énergie engendrée par l'écriture d'un mot sur une feuille parfaitement blanche. Le seuil s ainsi déterminé permet donc d'exclure les pages blanches ayant un léger bruit, par exemple ayant uniquement quelques pixels actifs disparates.

Si la quantité d'information est inférieure au seuil s, la page est détectée comme blanche.

On détermine lors d'une étape S7 s'il est possible d'effectuer une détection d'une page blanche sur au moins une page de la feuille. Si c'est le cas, alors le scanner passe à une étape S10, qui est une étape de classement des pages : les pages porteuses d'information sont enregistrées et traitées et les pages blanches ne sont ni traitées ni enregistrées.

En revanche, s'il n'est pas possible de détecter une page blanche lors de l'étape S6 de deuxième détection, le scanner 2 sélectionne ladite feuille et passe à une étape S8.

En conclusion, la deuxième détection selon l'étape S6 permet d'exclure certains cas, tels que les feuilles qui ne sont pas de couleur blanche, mais monochrome d'une autre couleur, les feuilles comportant uniquement des froissements et/ou de très faibles traversée de l'encre par porosité ou transparence qui sont éliminés par la binarisation.

Lors de l'étape S8, le scanner 2 attribue sur les feuilles issues de l'étape S7, le recto R de la feuille à la page ayant la plus grande probabilité d'être porteuse d'information. Le scanner 2 attribue le verso V à l'autre page de la feuille.

On donne ici un exemple de technique d'attribution du recto R et du verso V.

L'étape S8 d'attribution du recto et du verso peut consister à sélectionner comme recto la face qui comporte la plus grande énergie (somme de la valeur de tous les pixels).

Lors de l'étape S9, le scanner compare les deux pages de ladite feuille sélectionnée, pour les classer : une page est classée comme blanche lorsqu'elle est similaire à l'autre page de ladite feuille (on estime alors que l'information n'est pas une réelle information mais est vue par transparence ou porosité).

On donne ici des exemples de technique de comparaison des pages. Plusieurs techniques sont en effet possibles.

Pour effectuer une comparaison des pages, le scanner 2 utilise par exemple une indexation de chaque page qui consiste à décrire chaque page par son contenu, à l'aide de vecteurs constitués de paramètres de bas niveau relatifs à la couleur, la forme et la texture par exemple.

Ainsi, à chaque page correspond au moins un vecteur caractéristique formant au moins un indexe de la page.

La comparaison n'est pas effectuée sur les pages directement, mais la comparaison s'effectue plutôt sur des vecteurs caractéristiques, par recherche du nombre de similarités par exemple.

Le nombre de similarités correspond ainsi à la donnée caractéristique de similarité. On considère alors que les pages sont similaires lorsque la donnée caractéristique (le nombre de similarités entre les vecteurs) est supérieure à un critère de similarité.

Avantageusement, le scanner effectue ainsi une étape d'indexation telle que mentionnée ci-dessus, une étape de structuration de la page et une comparaison des informations provenant des deux étapes précédentes, par recherche de similarités entre les vecteurs par exemple.

Ainsi avantageusement, pour effectuer l'étape de comparaison entre les deux pages, le scanner 2 construit tout d'abord une carte de dissimilarités locales CDL formée de pixels CDL(x) ayant une position x, la valeur de chaque pixel CDL(x) est donnée par la formule :

$$\forall x \in \Re^{\acute{e}}, CDL(x) = \left(\overline{R(x)} \cdot V(x)\right) \cdot d(x, R)$$

où x représente la position du pixel sur une page ;

$V(x)$ est la valeur du pixel du verso à la position x ;

$\overline{R(x)}$ est l'inverse de la valeur du pixel du recto à la position x ;

$(\overline{R(x)} \cdot V(x))$ équivaut à un opérateur ET logique ; et

$d(x,R)$ est la distance minimale entre la position x et les pixels du recto ayant une valeur active.

Grâce à cette relation, le scanner 2 crée une carte de la même taille que le recto et le verso, et formée de l'ensemble des CDL(x). Chaque valeur CDL(x) de la carte est représentative de la distance entre les informations du verso et du recto. La carte montre ainsi si la majorité des pixels actifs du verso est à une distance proche ou non des pixels actifs sur le recto.

On comprend qu'en posant par exemple qu'un pixel à l'état non-actif a une valeur égale à zéro, la formule de construction de chaque CDL permet de mettre à zéro tous les pixels de la CDL ayant une position x où le verso est inactif (rien n'est détecté par le scanner à cet endroit du verso, il n'est donc pas nécessaire de faire des calculs de distance $d(x,R)$ pour ce pixel). De même, les pixels de la CDL seront nuls aux endroits où le recto est actif (valeur par exemple égale à 1, donc son inverse est nul). Le seul cas dans lequel les pixels de la CDL ne sont pas nuls, sont les pixels où le verso est actif et le recto non. Dans ce cas le résultat est actif (($\overline{R(x)} \cdot V(x)$) est alors par exemple 1), ce qui permet d'activer la dernière partie de la formule, à savoir $d(x,R)$.

Or $d(x,R)$ est la distance minimale entre un pixel à une position x donnée et les pixels actifs du recto.

On constate qu'afin de rendre plus rapides les calculs, une opération logique permet d'écarter les cas où à la même position x le pixel du recto et le pixel du verso sont actifs (distance égale à zéro). Étant donné que la mesure de distance $d(x,R)$ est la partie la plus gourmande en complexité de calcul, cette stratégie permet de faire des gains importants au niveau des coûts de calculs.

En résumé, la CDL est calculée en mesurant pour chaque pixel actif du verso, la distance minimale (non nulle comme expliqué au paragraphe précédent) avec les pixels actifs du recto.

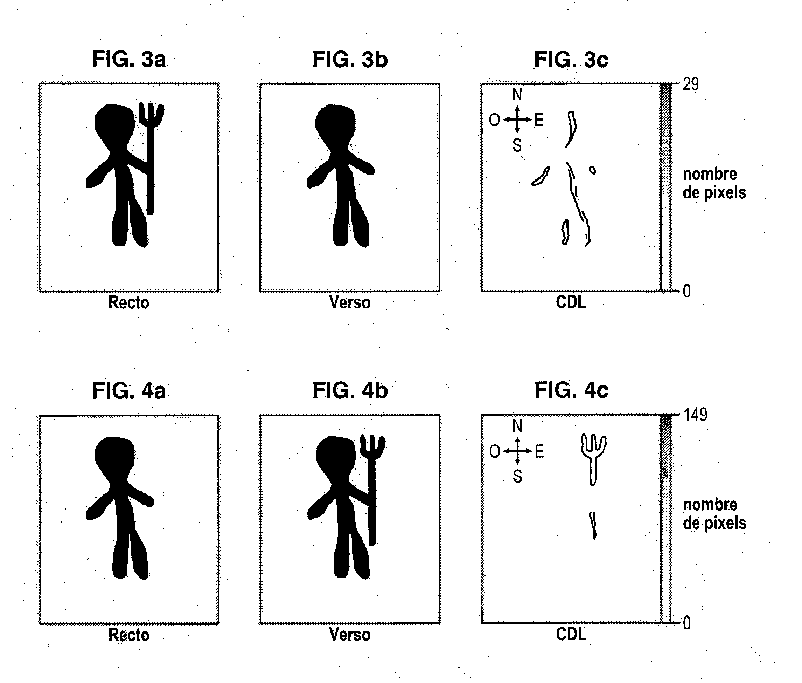

Les figures 3 et 4 illustrent la construction de la CDL.

Les figures 3a (recto) et 3b (verso) montrent que chacune des deux pages contient le dessin d'un « bonhomme ».

Sur la figure 3b, c'est-à-dire sur le verso le « bonhomme » est décalé par rapport au recto de la figure 3a et ne contient pas de trident. Nous pouvons voir grâce à la CDL construite à la figure 3c, que le décalage est en direction sud-est. La valeur des pixels de la CDL permet de connaitre la grandeur du décalage (en pixels). Comme on le verra plus en détail dans la suite, le verso 3b de cette feuille doit donc être détecté comme une page blanche, étant donné que l'information se trouve aussi sur le recto (du fait des faibles distances retranscrites sur la CDL, inférieures à 29 pixels).

Dans le cas contraire des figures 4, où l'on inverse le dessin sur le recto (figure 4a) et le verso (figure 4b) par rapport aux figures 3a et 3b, nous pouvons voir que le décalage est en direction nord-ouest et surtout qu'une partie de l'information du verso ne se trouve pas sur le recto (le trident). Le trident est détectable grâce aux fortes distances transcrites sur la CDL sur la figure 4c et allant jusqu'à 149 pixels (en comparaison des 29 pixels sur la figure 3c). Le résultat de l'interprétation de la CDL de la figure 4c est que le recto et le verso sont différents et sont tous les deux porteurs d'information.

Bien entendu, le résultat de la mise en oeuvre du procédé pour les figures 4 est le même que pour les figures 3, puisque le résultat doit être indépendant du sens de lecture de la feuille. C'est d'ailleurs pour cela que l'étape S8 est avantageusement mise en oeuvre. Dans l'exemple des figures 3 et 4, lors de l'étape S8, le scanner 2 sélectionne comme recto l'image avec le trident (figure 3a).

On donne ici un exemple de technique de calcul de distance $d(x,R)$.

Une technique avantageuse pour le calcul de $d(x,R)$ est par exemple le calcul de la distance de Manhattan (également connue sous la dénomination « city-block » par l'homme du métier).

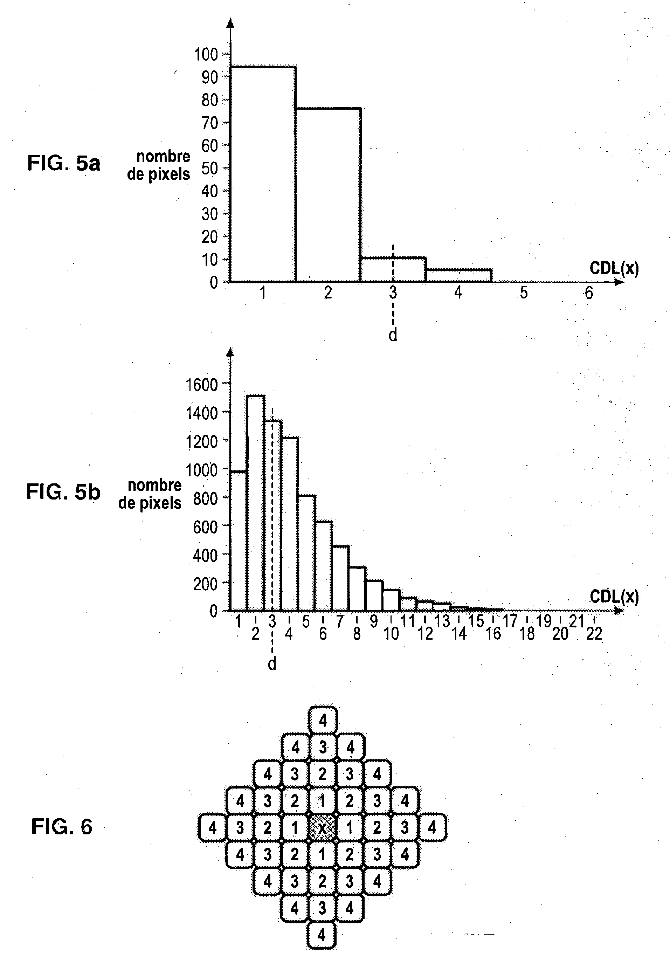

La figure 6 représente schématiquement le principe de calcul de la distance $d(x,R)$ de la distance de Manhattan, avec les valeurs de distance par rapport à la position x (distances de 1 à 4). Le calcul consiste à mesurer la distance en comptant le nombre de pixels à parcourir pour passer d'un pixel à l'autre. Dans notre cas, cette technique facilite la mise en oeuvre du procédé par le scanner.

Il suffit pour calculer la distance $d(x,R)$ de scruter successivement tous les pixels à une distance n du pixel d'origine. Dès que l'on trouve un pixel du recto qui soit actif, on arrête la scrutation, sinon on continue à n+1. Au final, la distance collectée est n et elle est sauvegardée dans la CDL à l'emplacement du pixel d'origine.

Comme le montrent les figures 5, le scanner 2 construit ensuite un histogramme regroupant tous les pixels CDL(x) ayant la même valeur, pour chaque valeur des CDL(x).

Comme on l'a déjà indiqué, la CDL apporte une représentation visuelle des zones de dissimilarités du verso par rapport au recto. Le but de la construction de l'histogramme est donc de pouvoir quantifier cette dissimilarité et de prendre une décision quant à la blancheur du verso.

On voit sur les figures 5 qu'un histogramme construit à partir de la comparaison de deux pages similaires (figure 5a) est différent d'un histogramme construit à partir de deux pages dissimilaires (figure 5b). Il est nettement visible que dans le cas d'une feuille comportant une page blanche, les valeurs des CDL(x) sont plus proches de zéro.

Le scanner 2 considère que les pages recto R et verso V sont similaires lorsque le nombre de pixels de la carte de dissimilarités locales CDL, dont la valeur est inférieure à une valeur d de distance prédéterminée, est supérieur à une proportion H, et classe ainsi la page V verso correspondant comme page blanche, lors de l'étape S10.

La CDL carte de dissimilarités locales peut donc être considérée comme la donnée caractéristique de la similarité entre les deux pages, et la proportion H peut donc être considérée comme le critère de similarité.

La valeur d de distance prédéterminée correspond à une distance de référence $d(x,R)$ de trois pixels par exemple (on a alors d=3 si la valeur active est égale à 1), la proportion H étant par exemple de 70% des pixels de la carte de dissimilarités locales. Avec ces valeurs, on obtient un résultat satisfaisant. Dans le cas de la figure 5a, nous avons 96% des pixels de la CDL qui sont à une distance de moins de trois pixels, et dans le cas de la figure 5b, seuls 47% sont dans ce cas (le verso est dissimilaire au recto).

Si plus de 70% des pixels actifs du verso sont proches de moins de trois pixels des pixels actifs du recto, le verso est considéré comme blanc et les informations qu'il contient sont traduites comme la traversée (par porosité ou transparence) du recto.

Le fait de prendre en compte uniquement les distances inférieures à la distance d de référence de trois pixels par exemple rend inutile de connaitre la valeur des distances supérieures à trois pixels. Ainsi, lors du calcul des distances pour le calcul de la CDL, quand la distance $d(x,R)$ dépasse la distance de référence et atteint la valeur de 4 (dans notre exemple), le scanner 2 arrête le calcul de la distance et le pixel de la CDL concerné est automatiquement affecté d'une valeur d+1 (soit 4 puisqu'on a une valeur 1 pour une valeur active de pixel), et non pas de la valeur réelle calculée par la formule générale de la CDL. Cette adaptation permet d'augmenter considérablement la vitesse de mise en oeuvre du procédé et le besoin mémoire pour la CDL (les pixels peuvent être codés sur 2 bits).

## Revendications

1. Procédé de détection de pages blanches de feuilles d'un document scanné sur une machine (1) comportant un scanner (2), dans lequel le scanner(2)

   - scanne (S0) deux pages d'au moins une feuille d'un document à scanner ;
   - effectue au moins une détection (S6) de page blanche sur chaque feuille scannée ;
   - sélectionne (S7) chaque feuille ne comportant pas au moins une page détectée comme blanche lors de la détection (S6) ;
   - **caractérisé en ce que** le scanner compare (S9) les deux pages de ladite feuille sélectionnée, et classe (S9) une page comme blanche lorsqu'une donnée caractéristique de la similarité de ladite page avec l'autre page de ladite feuille est supérieure à un critère de similarité.

2. Procédé selon la revendication 1, dans lequel le scanner

   - scanne (S0) les pages pour transformer chaque page en un ensemble de pixels appartenant à $\mathfrak{R}^{é}$ l'espace des nombres réels, et transpose (S2) chaque pixel pour qu'il présente un niveau de gris, et
   - effectue en outre, antérieurement à la sélection (S7) de chaque feuille ne comportant pas au moins une page détectée comme blanche, une binarisation (S5) des pixels des pages de chaque feuille, la binarisation consistant à donner
   une valeur active à chaque pixel dont le niveau de gris est supérieur à un seuil $\tau$, et
   une valeur inactive à un pixel dont le niveau de gris est inférieur au seuil $\tau$,

   où $\tau$ est défini dynamiquement en fonction du voisinage du pixel.

3. Procédé selon la revendication 2, dans lequel,

- le scanner attribue (S8), postérieurement à la binarisation (S5), le recto R d'une feuille à la page ayant la plus grande probabilité d'être porteuse d'information, le scanner attribuant le verso V à l'autre page de la feuille, et dans lequel, pour effectuer l'étape de comparaison entre les deux pages,
- le scanner (2) construit tout d'abord une carte de dissimilarités locales CDL, formée de pixels CDL(x) ayant une position x, la valeur de chaque pixel CDL(x) étant donnée par la formule :

$$\forall x \in \mathfrak{R}^{\acute{e}}, CDL(x) = \left(\overline{R(x)} \cdot V(x)\right) \cdot d(x,R)$$

où x représente la position du pixel sur une page ;
V(x) est la valeur du pixel du verso à la position x ;
$\overline{R(x)}$ est l'inverse de la valeur du pixel du recto à la position x ;
$(\overline{R(x)} \cdot V(x))$ équivaut à un opérateur ET logique
d(x,R) est la distance minimale calculée entre la position x et les pixels du recto ayant une valeur active ;

- le scanner (2) construit ensuite un histogramme regroupant tous les pixels CDL(x) ayant la même valeur, pour chaque valeur des CDL(x), et
- le scanner (2) considère que les pages recto R et verso V sont similaires lorsque le nombre de pixels de la carte de dissimilarités locales CDL, dont la valeur est inférieure à une valeur d de distance prédéterminée, est supérieur à une proportion H, et classe (S9) ainsi la page V verso correspondant comme page blanche.

4. Procédé selon la revendication 3, dans lequel le scanner (2) calcule d(x,R) en utilisant la distance dite de Manhattan.

5. Procédé selon l'une des revendications 3 ou 4, dans lequel la valeur d de distance prédéterminée correspond à une distance de référence d(x,R) de trois pixels, la proportion H étant de 70% des pixels de la carte de dissimilarités locales.

6. Procédé selon l'une des revendications 3 à 5, dans lequel, lors du calcul de la distance d(x,R), le scanner affecte directement la valeur (d+1) au pixel CDL(x) dès que la distance d(x,R) dépasse strictement la distance de référence au point x, et arrête le calcul de distance correspondant.

7. Procédé selon l'une des revendications 1 à 6, dans lequel l'étape de au moins une détection de page blanche sur chaque feuille scannée comporte les étapes selon lesquelles le scanner (2)

- effectue une première détection (S3) de page blanche ou de page porteuse d'information sur chaque feuille scannée, en niveau de gris ; et
- sélectionne (S4) chaque feuille dont chaque page n'a pas été détectée comme blanche ou porteuse d'information lors de la première détection (S3).

8. Procédé selon l'une des revendications 3 à 7, dans lequel l'étape de au moins une détection de page blanche sur chaque feuille scannée comporte, postérieurement à la binarisation (S5), une étape selon laquelle le scanner (2) effectue une deuxième détection (S6) de page blanche ou de page porteuse d'information sur chaque page binarisée, l'étape d'attribution (S8) d'un recto et d'un verso étant alors effectuée sur chaque feuille ne comportant pas au moins une page détectée comme blanche lors de la deuxième détection (S6).

9. Procédé selon l'une des revendications 1 à 8, dans lequel le scanner (2) effectue une étape (S2) de suppression des bords et/ou de réajustement de la taille et/ou de transposition en niveau de gris sur les pages scannées.

10. Machine (1) **caractérisée en ce qu'**elle comporte un scanner (2) de mise en oeuvre d'un procédé selon l'une des revendications 1 à 9.

**Patentansprüche**

1. Verfahren zum Nachweis von leeren Seiten der Blätter eines Dokuments, gescannt auf einem Gerät (1), das einen Scanner (2) umfasst, wobei der Scanner (2)

- zwei Seiten mindestens eines Blatts eines Dokuments, das gescannt werden soll, scannt (S0);
- mindestens einen Nachweis (S6) einer leeren Seite auf jedem gescannten Blatt durchführt;
- jedes Blatt, das nicht mindestens eine nachgewiesene Seite umfasst, beim Nachweis (S6) als leer auswählt (S7);
- **dadurch gekennzeichnet, dass** der Scanner die zwei Seiten des ausgewählten Blatts vergleicht (S9) und eine Seite als leer klassifiziert (S9), wenn ein charakteristisches Datum der Ähnlichkeit der Seite mit der anderen Seite des Blatts größer als ein Ähnlichkeitkriterium ist.

2.  Verfahren nach Anspruch 1, wobei der Scanner

    - die Seiten scannt (S0), um jede Seite in eine Einheit von Pixeln umzuwandeln, die zu $\mathfrak{R}^\ell$ dem Raum der reellen Zahlen gehört, und jedes Pixel transponiert (S2), damit es eine Graustufe aufweist, und
    - außerdem, vor der Auswahl (S7) jedes Blatts, das nicht mindestens eine als leer nachgewiesene Seite umfasst, eine Binarisierung (S5) der Pixel der Seiten jedes Blatts durchführt, wobei die Binarisierung darin besteht, jedem Pixel, dessen Graustufe über einer Schwelle $\tau$ liegt, einen aktiven Wert zu geben, und einem Pixel, dessen Graustufe unter der Schwelle $\tau$ liegt, einen inaktiven Wert zu geben, wobei $\tau$ dynamisch je nach der Umgebung des Pixels definiert ist.

3.  Verfahren nach Anspruch 2, wobei

    - der Scanner nach der Binarisierung (S5) die Vorderseite R eines Blatts der Seite zuweist, die die größte Wahrscheinlichkeit aufweist, Information zu tragen, wobei der Scanner die Rückseite V der anderen Seite des Blatts zuweist,
    und wobei, um den Schritt des Vergleichens zwischen den zwei Seiten durchzuführen,
    - der Scanner (2) zunächst eine Karte der lokalen Ungleichheiten CDL aufbaut, die aus Pixeln CDL(x) mit einer Position x gebildet ist, wobei der Wert jedes Pixels CDL(x) durch die folgende Formel gegeben ist:

$$\forall x \in \mathfrak{R}^\ell, CDL(x) = \left(\overline{\overline{R(x)} \cdot V(x)}\right) \cdot d(x,R)$$

    wobei x die Position des Pixels auf einer Seite darstellt;
    V(x) der Wert des Pixels der Rückseite der Position x ist;
    $\overline{R(x)}$ der Kehrwert des Werts des Pixels der Vorderseite der Position x ist;
    $(\overline{R(x)} \cdot V(x))_{\text{einem}}$ logischen ET-Operator entspricht, d(x,R) der minimale Abstand ist, der zwischen der Position x und den Pixeln der Vorderseite mit einem aktiven Wert berechnet wird;

    - der Scanner (2) anschließend ein Histogramm aufbaut, das alle Pixel CDL(x) mit dem gleichen Wert für jeden Wert der CDL(x) neu gruppiert, und
    - der Scanner (2) erachtet, dass die Vorder- R und Rückseite V ähnlich sind, wenn die Anzahl der Pixel der Karte der lokalen Ungleichheiten CDL, deren Wert geringer als ein Wert d des vorbestimmten Abstands ist, größer als ein Proportion H ist und somit die entsprechende Rückseite V als leere Seite klassifiziert (S9).

4.  Verfahren nach Anspruch 3, wobei der Scanner (2) d(x,R) unter Verwendung des als Manhattan bezeichneten Abstands berechnet.

5.  Verfahren nach einem der Ansprüche 3 oder 4, wobei der Wert d des vorbestimmten Abstands einem Referenzabstand d(x,R) von drei Pixeln entspricht, wobei die Proportion H gleich 70 % der Pixel der Karte der lokalen Ungleichheiten ist.

6.  Verfahren nach einem der Ansprüche 3 bis 5, wobei bei der Berechnung des Abstands d(x,R) der Scanner direkt den Wert (d+1) dem Pixel CDL(x) zuweist, sobald der Abstand d(x,R) streng den Referenzabstand am Punkt x übersteigt, und die entsprechende Abstandsberechnung stoppt.

7.  Verfahren nach einem der Ansprüche 1 bis 6, wobei der Schritt des mindestens einen Nachweisens einer leeren Seite auf jedem gescannten Blatt die Schritte umfasst, nach denen der Scanner (2)

- einen ersten Nachweis (S3) einer leeren Seite oder einer Seite, die Information trägt, auf jedem gescannten Blatt auf der Graustufe durchführt; und
- jedes Blatt (S4) auswählt, bei dem jede Seite nicht als leere Seite oder Seite, die Information trägt, beim ersten Nachweis (S3) nachgewiesen wurde.

8. Verfahren nach einem der Ansprüche 3 bis 7, wobei der Schritt des mindestens einen Nachweisens einer leeren Seite auf jedem gescannten Blatt nach der Binarisierung (S5) einen Schritt umfasst, nach dem der Scanner (2) einen zweiten Nachweis (S6) einer leeren Seite oder einer Seite, die Information trägt, auf jeder binarisierten Seite durchführt, wobei der Schritt des Zuweisens (S8) einer Vorderseite und einer Rückseite dann auf jedem Blatt durchgeführt wird, das nicht mindestens eine als leer nachgewiesene Seite beim zweiten Nachweis (S6) umfasst.

9. Verfahren nach einem der Ansprüche 1 bis 8, wobei der Scanner (2) einen Schritt (S2) des Entfernens der Ränder und/oder des Neueinstellens der Größe und/oder des Transponierens auf der Graunstufe der gescannten Seiten durchführt.

10. Gerät (1), **dadurch gekennzeichnet, dass** es einen Scanner (2) zur Durchführung eines Verfahrens nach einem der Ansprüche 1 bis 9 umfasst.

**Claims**

1. Method for detection of blank pages of a scanned document on a machine (1) comprising a scanner (2) in which the scanner (2)

    - scans (S0) two pages of at least one sheet of a document to be scanned;
    - performs at least one blank page detection (S6) on each scanned sheet;
    - selects (S7) each sheet that does not contain at least one page as being blank during detection (S6);
    - **characterised in that** the scanner compares (S9) the two pages of said selected sheet and classifies (S9) a page as being blank when a data characteristic of similarity of said page with the other page on said sheet is greater than a similarity criterion.

2. Method according to claim 1, in which the scanner

    - scans (S0) the pages to transform each page into a set of pixels belonging to $\mathfrak{R}^{\acute{e}}$, the real numbers space, and transposes (S2) each pixel so that it has a grey level, and
    - performs also, before selecting (S7) each sheet that does not contain at least one page detected as being blank, binarisation (S5) of the pixels of the pages of each sheet, binarisation consisting of assigning:

        an active value to each pixel which the grey level is greater than a threshold $\tau$, and
        an inactive value to a pixel for which the grey level is less than the threshold $\tau$,
        where $\tau$ is dynamically defined as a function of the neighbourhood of the pixel.

3. Method according to the claim 2 in which,

    - the scanner assigns (S8), after binarisation (S5), the front R of a sheet to the page with the greatest probability of carrying information, and the back side V to the other page of the sheet, and in which, in order to perform the comparison step between the two pages,
    - the scanner (2) starts by building up a local dissimilarities map CDL composed of pixels CDL(x) with a position x, the value of each pixel CDL(s) being given by the formula:

$$\forall x \in \mathfrak{R}^{\acute{e}}, CDL(x) = \left( \overline{R(x)} . V(x) \right) . d(x, R)$$

        where x represents the position of the pixel on a page;
        V(x) is the value of the pixel on the back at the position x;
        $\overline{R(x)}$ is the inverse of the value of the pixel on the front at position x;

$(\overline{R(x)}.V(x))$ is equivalent to a logical AND operator

$d(x,R)$ is the minimum distance calculated between position x and the pixels of the front with an active value;

- the scanner (2) then builds up a histogram containing all pixels CDL(x) with the same value for each value of CDL(x), and
- the scanner (2) considers that the front R and back V pages are similar when the number of pixels on the local dissimilarities map CDL with a value less than a predetermined distance value d, is greater than a proportion H and classifies (S9) the corresponding back page V as being a blank page.

4. Method according to claim 3, in which the scanner (2) calculates $d(x,R)$ using the so-called Manhattan distance.

5. Method according to one of claims 3 or 4, in which the predetermined distance value d corresponds to a reference distance $d(x,R)$ of three pixels, the proportion H being 70% of the pixels of the local dissimilarities map.

6. Method according to one of claims 3 to 5 in which, during the distance calculation $d(x,R)$, the scanner directly assigns the value (d+1) to the pixel CDL(x) when the distance $d(x,R)$ exceeds the reference distance at point x, and stops the corresponding distance calculation.

7. Method according to one of claims 1 to 6, in which the step to detect at least one blank page on each scanned sheet comprises the steps according to which the scanner (2)

- performs a first detection (S3) of a blank page or a page carrying information on each scanned sheet, in grey level; and
- selects (S4) each sheet for which each page has not been detected as being blank or carrying information during the first detection (S3).

8. Method according to one of claims 3 to 7, in which the step to detect at least one blank page on each scanned sheet comprises a step after binarisation (S5), according to which the scanner (2) performs a second detection (S6) of a blank page or a page carrying information on each binarised page, the step to assign (S8) a front and a back then being performed on each sheet not comprising at least one page detected as being blank during the second detection (S6).

9. Method according to one of claims 1 to 8, in which the scanner (2) performs a step (S2) to delete the edges and/or readjust the size and/or make a transposition into grey level on the scanned pages.

10. Machine (1) **characterised in that** it comprises a scanner (2) using a method according to one of claims 1 to 9.

## FIG. 1

```
     ┌──────────┐
     │    S0    │
     └──────────┘
          │
     ┌──────────┐
     │    S1    │
     └──────────┘
          │
     ┌──────────┐
     │          │
     │    S2    │
     │          │
     └──────────┘
          │
     ┌──────────┐
     │    S3    │
     └──────────┘
          │
        ◇ S4 ◇──○──┐
          │        │
          │   ┌────┘
     ┌──────────┐
     │    S5    │
     └──────────┘
          │
     ┌──────────┐
     │    S6    │
     └──────────┘
          │
        ◇ S7 ◇──○──┐
          │        │
     ┌──────────┐
     │    S8    │
     └──────────┘
          │
     ┌──────────┐
     │    S9    │
     └──────────┘
          │
     ┌──────────┐
     │   S10    │
     └──────────┘
```

## FIG. 2

```
┌────────────────────────────┐
│  ┌──────────┐              │
│  │    2     │       1      │
│  └──────────┘              │
└────────────────────────────┘
```

## FIG. 3a

Recto

## FIG. 3b

Verso

## FIG. 3c

N

O E

S

CDL

29

nombre
de pixels

0

## FIG. 4a

Recto

## FIG. 4b

Verso

## FIG. 4c

N

O E

S

CDL

149

nombre
de pixels

0

EP 2 476 244 B1

FIG. 5a

FIG. 5b

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006104627 A

- JP 2002044367 A

**Littérature non-brevet citée dans la description**

- **SAUVOLA.** *Adaptative document image binarisation,* 1998